# FASCICULE DE BREVET EUROPEEN

(11) **EP 1 096 810 B1**
(45) Date de publication et mention de la délivrance du brevet: **03.12.2003**
(21) Numéro de dépôt: 00402729.8
(22) Date de dépôt: 04.10.2000
(51) Int. Cl.: H04Q 7/20, H04Q 7/32

(54) **Procédé de gestion d'un téléphone bimode**
Verfahren zur Handhabung eines Dualmodustelefons
Method for handling a dual mode telephone

(30) Priorité: 27.10.1999 FR 9913442
(43) Date de publication de la demande: 02.05.2001
(73) Titulaire: SAGEM S.A., 75015 Paris (FR)
(72) Inventeur: Tisne, Alain, 95150 Taverny (FR); Castet, Jean-Philippe, 92500 Rueil-Malmaison (FR)
(74) Mandataire: Schmit, Christian Norbert Marie

(56) Documents cités:
- DE-A- 19 605 019
- GB-A- 2 321 162
- US-A- 5 732 360
- US-A- 5 870 673
- US-A- 5 911 120

## Description

La présente invention a pour objet un procédé de gestion d'un téléphone bimode. Elle s'applique plus particulièrement au domaine de la téléphonie regroupant un système de téléphonie mobile et un système de téléphonie fixe. Le système de téléphonie selon la norme DECT est considéré comme faisant partie des systèmes de téléphonie fixe, sans fils, en ce sens qu'un téléphone selon cette norme est associé radioélectriquement à une base elle-même reliée, de manière filaire, à un réseau de téléphonie fixe, généralement appelé réseau téléphonique commuté. Par opposition, un téléphone mobile d'un système de téléphonie mobile est relié radioélectriquement à un réseau de téléphonie mobile lui-même interconnecté avec un réseau de téléphonie fixe. Le réseau de téléphonie mobile permet de gérer notamment une itinérance du téléphone mobile. Ainsi, un utilisateur muni d'un téléphone mobile peut se déplacer librement à l'intérieur d'un territoire couvert par le réseau de téléphonie mobile et être toujours joignable, un utilisateur muni d'un téléphone selon la norme DECT n'étant joignable que s'il reste à l'intérieur d'une zone géographique couverte par la base, appelée par la suite zone domestique.

L'expression station de base représente une expression consacrée dans le domaine de la téléphonie mobile pour désigner l'élément émetteur récepteur du réseau de téléphonie mobile servant d'interface radioélectrique avec un téléphone mobile. Le terme base représente un terme consacré dans le domaine de la téléphonie selon la norme DECT pour désigner l'élément émetteur récepteur servant d'interface radioélectrique entre le téléphone et le réseau téléphonique commuté.

Actuellement, on connaît les téléphones bimodes, c'est-à-dire des téléphones comportant un premier dispositif de téléphonie, généralement selon la norme GSM, et un deuxième dispositif de téléphonie selon la norme DECT. Ainsi, avec le même téléphone, on est relié d'une part à un réseau de téléphonie mobile et d'autre part à un réseau de téléphonie fixe. Dans une solution connue de l'état de la technique permettant de gérer un tel téléphone bimode, on active soit le premier dispositif de téléphonie soit le deuxième dispositif de téléphonie selon que l'on se trouve en dehors ou à l'intérieur de la zone domestique respectivement.

Le document US-A-5 732 360 décrit un dispositif de télécommunication mobile comportant des moyens de sauvegarde d'un code d'identification d'une station de base couvrant une zone comprenant une zone couverte par la base. Ce téléphone compare des identifiants de stations de bases avec l'identifiant mémorisé et lorsqu'il y a correspondance alors le téléphone bimode bascule sur le mode DECT. Avec ce dispositif, un seul dispositif de téléphonie peut être actif à la fois, soit GSM, soit DECT, mais jamais les deux en même temps.

Cette solution présente des problèmes. En effet, une seule ligne est disponible à la fois. Ainsi, lorsque le téléphone bimode est dans la zone privée alors le dispositif de téléphonie selon la norme DECT est activé et celui selon la norme GSM est désactivé. En conséquence, un appel entrant destiné au dispositif de téléphonie selon la norme GSM n'aboutira pas puisque ce dernier est désactivé. De même, lorsque le téléphone bimode est en dehors de la zone privée, alors un appel à destination du dispositif de téléphonie selon la norme DECT n'aboutira pas puisque ce dernier a été désactivé.

Une solution à ce problème peut consister à laisser les deux dispositifs dans un état actif. Un autre problème apparaît alors et est relatif à une autonomie du dispositif d'alimentation du téléphone bimode. En effet, une autonomie de ce dispositif d'alimentation est liée à une consommation du premier dispositif et du deuxième dispositif. Ainsi, on ne peut pas laisser actif simultanément les deux dispositifs à tout instant sauf à limiter très sérieusement l'autonomie du dispositif d'alimentation. Ainsi, avec l'invention, le premier dispositif et le deuxième dispositif sont actifs simultanément seulement lorsque le téléphone bimode est à portée de la base.

La présente invention a pour objet de remédier à ces problèmes en proposant un proposant un procédé de gestion de ce téléphone bimode. Le procédé de gestion selon l'invention permet de maintenir dans un état actif les deux dispositifs de téléphonie lorsque le téléphone bimode se trouve dans la zone privée. Pour ce faire, on renseigne le téléphone mobile sur une position géographique de la zone privée.

L'invention concerne donc un procédé de gestion d'un téléphone bimode tel que défini par la revendication 1.

L'invention concerne aussi un téléphone bimode tel que difini par la revendication 9.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un exemple simplifié de mise en oeuvre du procédé de l'invention avec notamment un téléphone bimode de l'invention ;
- Figure 2 : une représentation, sous forme d'un algorithme, d'un exemple de fonctionnement du procédé de l'invention en faisant apparaître les étapes principales.

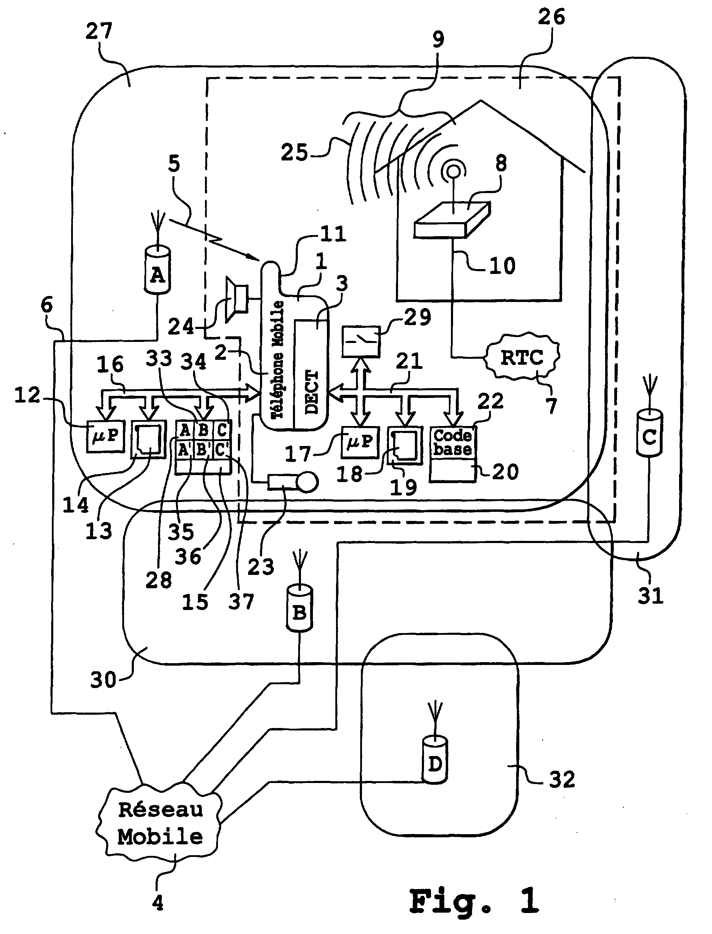

La figure 1 montre un exemple de mise en oeuvre du procédé selon l'invention pour gérer un téléphone 1 bimode. Ce téléphone 1 comporte un premier dispositif 2 de téléphonie et un deuxième dispositif 3 de téléphonie. Le dispositif 2 est relié à un réseau 4 de téléphonie mobile par une station A de base. La station A est reliée d'une part au dispositif 2 par une liaison 5 radioélectrique et d'autre part au réseau 4 par une liaison 6 généralement filaire. Le dispositif 3 est relié à un réseau 7 de téléphonie fixe, en général le réseau téléphonique commuté, par une base 8. La base 8 est reliée d'une part au dispositif 3 par une liaison 9 radioélectrique et d'autre part au réseau 7 par une liaison 10 généralement filaire. En outre, le téléphone 1 comporte une antenne 11 pour recevoir des informations à l'aide de la liaison 5 ou de la liaison 9.

Un contrôle et une gestion du dispositif 2 sont assurés par un microprocesseur 12 commandé par un programme 13 dans une mémoire 14 de programme, une mémoire 15 de travail et un bus 16 de commandes, d'adresses et de données permettant de relier les différents éléments du dispositif 2. Le dispositif 3 est contrôlé par un microprocesseur 17 commandé par un programme 18 dans une mémoire 19 de programme, une mémoire 20 de travail et de sauvegarde, et un bus 21 de commandes, d'adresses et de données reliant les différents éléments du dispositif 3. La mémoire 20 comporte notamment, à un emplacement 22, un code d'identification de la base 8 permettant ainsi au dispositif 3 de savoir qu'une base avec laquelle il communique est la base 8. De plus, le téléphone 1 comporte un connecteur (non représenté) d'interfaces entre le dispositif 2 et le dispositif 3. En conséquence, le dispositif 3 peut, par l'intermédiaire de ce connecteur, avoir accès notamment à un micro 23 et à un haut-parleur 24 du dispositif 2 ainsi qu'à l'antenne 11. En effet, l'antenne 11 peut être utilisée par le dispositif 2 et par le dispositif 3. Dans un exemple le dispositif 2 est un dispositif de téléphonie mobile de type GSM et le dispositif est un dispositif de téléphonie mobile de type DECT. Une fréquence de fonctionnement du dispositif 3 est de l'ordre de 1900 MHz et une fréquence de fonctionnement du dispositif 2 est de l'ordre de 1800 MHz, dans le cas d'un système DSC, ou de l'ordre de 900 MHz, dans le cas d'un système GSM.

La liaison 9 est associée à un signal 25 radioélectrique. Une distance maximale de propagation, à partir de la base 8, du signal 25 permet de définir une zone 26 domestique de couverture, c'est-à-dire une zone à l'intérieur de laquelle le dispositif 3 peut communiquer avec la base 8. La station A permet de couvrir une zone 27 géographique à l'intérieur de laquelle le dispositif 2 peut communiquer avec la station A. Dans l'invention, on identifie une première zone privée avec le dispositif 2, la première zone privée étant, par exemple, la zone 27. Pour cela, et lorsque le téléphone se trouve à l'intérieur de la zone 26, on mémorise dans une mémoire de sauvegarde du téléphone 1, par exemple la mémoire 15, un code d'identification de la station A. Ce code d'identification est mémorisé à un emplacement 28 de la mémoire 15. Lorsque le téléphone 1 est à l'intérieur de la zone 26, le dispositif 3 détecte une présence de la base 8. Dans ce cas, on dit que le dispositif 3 est à proximité de la base 8 ou encore à portée de la base 8.

Ainsi, lorsqu'on détecte une absence du téléphone 1 dans la zone 27, on met en veille le dispositif 3. Pour cette détection, le dispositif 3 comporte un moyen 29 de mise en veille, le moyen 29 comporte par exemple un interrupteur (non représenté) permettant de désactiver les différents éléments du dispositif 3, le moyen 29 étant commandé par ailleurs par le programme 13 du dispositif 2. Par mise en veille du dispositif 3, il faut comprendre qu'une mise en veille peut être soit une vrai mise en veille avec arrêt de la fonction, comme dans l'exemple ci dessus, soit une réduction de l'activité de la fonction de recherche du dispositif 3. La réduction de l'activité de recherche du dispositif 3 peut être exprimée comme un rapport de temps entre une activité de recherche de la base 8 et une activité de veille radio, c'est à dire qu'on n'émet pas. Au lieu de rechercher la base 8 X secondes toutes les minutes, par exemple, le dispositif 3 recherche la base 8 X secondes toutes les 10 minutes, par exemple.

Un algorithme courant de recherche de la base 8 utilise un rapport décroissant du temps de recherche sur le temps de veille radio. Par exemple, le dispositif cherche 1 seconde toutes les 10 secondes, puis 1 seconde toutes les 20 secondes, puis 1 seconde toutes les 30 secondes, puis 1 seconde toutes les minutes etc.... En fait le mobile converge peu à peu de l'état hors veille à l'état en veille sans jamais l'atteindre totalement. La transition veille/hors veille peut alors être décrite comme le fait de repartir au début de l'algorithme, et la transition hors veille/veille peut être décrite comme le fait de passer tout de suite à une fréquence de recherche donnée, ou bien d'autoriser un rapport temps de repos sur temps de recherche plus grand.

De plus, le réseau 4 comporte plusieurs stations de base comme par exemple une station B, une station C et une station D chacune couvrant une zone 30, 31 et 32 géographique respectivement. Dans cet exemple, les zones 30 et 31 sont adjacentes à la zone 27. La zone 32 est adjacente à la zone 30 mais disjointe par rapport à la zone 27. Ainsi, lorsque le téléphone 1 se trouve dans la zone 32 couverte par la station D, un code d'identification associé est différent du code mémorisé à l'emplacement 28. Le dispositif 2 détecte donc, suite à cette différence de code, une absence du téléphone 1 dans la zone 26.

De manière complémentaire, lorsque le dispositif 2 reçoit un code d'identification d'une station de base identique au code mémorisé à l'emplacement 28 alors il détecte une présence du téléphone 1 à l'intérieur de la zone 27. En conséquence, le moyen 29 met le dispositif 3 dans un état hors veille après cette détection. Le dispositif 3 peut ainsi établir à nouveau une liaison 9 avec la base 8 dont un code d'identification correspond au code mémorisé à l'emplacement 22.

Dans une variante de l'invention, on mémorise dans la mémoire 15 un groupe de codes d'identification. Chaque code d'identification identifie une station de base couvrant une zone comprenant, en tout ou partie, la zone 26 ou couvrant une zone proche de la zone 26 ou plutôt 27. Une zone proche de la zone domestique correspond à une zone adjacente à la zone 26. Dans un exemple, la zone 30 et la zone 31 couvrent une zone comprenant une partie de la zone 26. Ainsi, la première zone privée est formée à partir de la zone 27, de la zone 30 et de la zone 31. En conséquence, le dispositif 2 mémorise, en plus du code d'identification mémorisé à l'emplacement 28, un code d'identification de la station B et un code d'identification de la station C à l'emplacement mémoire 33 et 34 respectivement. Ainsi, lorsque le dispositif 2 reçoit un code d'identification identique à l'un des codes d'identification mémorisés aux emplacements 28, 33 et 34 alors le moyen 29 est commandé par le microprocesseur 12 pour mettre le dispositif 3 dans un état hors veille.

Dans une deuxième variante de l'invention on identifie une deuxième zone privée (non représentée) en mémorisant dans la mémoire 15 un deuxième groupe d'identification de la station de base. La première zone privée correspond dans un exemple à un lieu où se trouve le domicile d'un utilisateur du téléphone 1 et la deuxième zone privée correspond à un lieu géographique où se trouve un lieu de travail de l'utilisateur. Dans ce cas le dispositif 3 peut être associé avec une deuxième base ou alors l'utilisateur dispose d'un deuxième dispositif tel que le dispositif 3.

Dans un exemple préféré, la mémoire de sauvegarde, la mémoire 15 dans un exemple, est placée dans le dispositif 2. En outre, le téléphone 1 comporte, dans un exemple préféré, un moyen de temporisation (non représenté). Ce moyen de temporisation peut être un compteur géré par le moyen 29 par exemple voire par le microprocesseur 12 ou toute autre solution permettant de produire une temporisation. Ainsi, le moyen 29 met le dispositif 3 dans un état de veille après l'écoulement d'une temporisation déclenchée lorsqu'une absence du téléphone 1 dans la zone 26 a été détectée. De même, on met le dispositif 3 dans un état hors veille après l'écoulement d'une temporisation déclenchée lorsqu'une présence du téléphone 1 à l'intérieur de la zone 26 a été détectée. Ceci crée un effet hystérésis qui permet d'éviter des commutations intempestives entre un état de mise en veille et un état de mise hors veille lorsque le téléphone 1 se trouve en frontière de la zone 26 par exemple.

Dans un exemple préféré le dispositif 3 est incorporé dans le dispositif d'alimentation du téléphone 1, ce dispositif d'alimentation étant généralement amovible.

La mise en veille du dispositif 3 est réalisée en interrompant une alimentation des différents éléments du dispositif 3 mais pourrait très bien être réalisée selon d'autres modes de mise en veille tel qu'un fonctionnement avec une fréquence plus basse ou en n'alimentant que certains éléments et en désactivant les éléments consommant le plus d'énergie électrique. La mémoire 20 est donc une mémoire de préférence non volatile ou alors elle est munie d'une alimentation de sauvegarde pour le cas où l'alimentation de la mémoire 20 est coupée pendant la phase de veille du dispositif 3.

Dans une variante préférée de l'invention, on prévoit un fonctionnement par défaut du téléphone 1. Ce fonctionnement par défaut trouve son utilité lorsque le dispositif 2 est hors de portée des stations A, B, C et D et plus généralement lorsque le réseau 4 ne peut plus détecter, et donc localiser, le dispositif 2 et par la même le téléphone 1. Dans ce cas de figure, le dispositif 3 est mis automatiquement dans un état hors veille. En effet, il peut arriver, par exemple, que la base 8 soit dans un lieu, ou le dispositif 2 n'arrive pas à établir de communication avec une station de base.

Dans une autre variante, voire dans cette variante préférée, on met, ou non, le dispositif 3 dans un état hors veille en fonction d'un appui sur une touche, non représentée, du téléphone 1 et des informations, selon l'invention, présentes dans la mémoire 15. Ainsi, lors d'un appui sur une touche du téléphone 1, on met le dispositif 3 dans un état hors veille si celui-ci se trouve dans la zone 27 et ou si le dispositif 2 est hors de portée des stations A, B, Cet D. Plus généralement, lorsque le réseau 4 ne parvient pas à localiser le dispositif 2 alors celui-ci est hors de portée d'une station de base. Par contre, la mise dans un état hors veille est inhibée lorsqu'une absence, dans la zone 27, du dispositif 2 est détectée. Dans ce cas, le réseau 4 parvient à localiser le dispositif 2 et on en déduit donc que le dispositif 3 est hors de portée de la base 8.

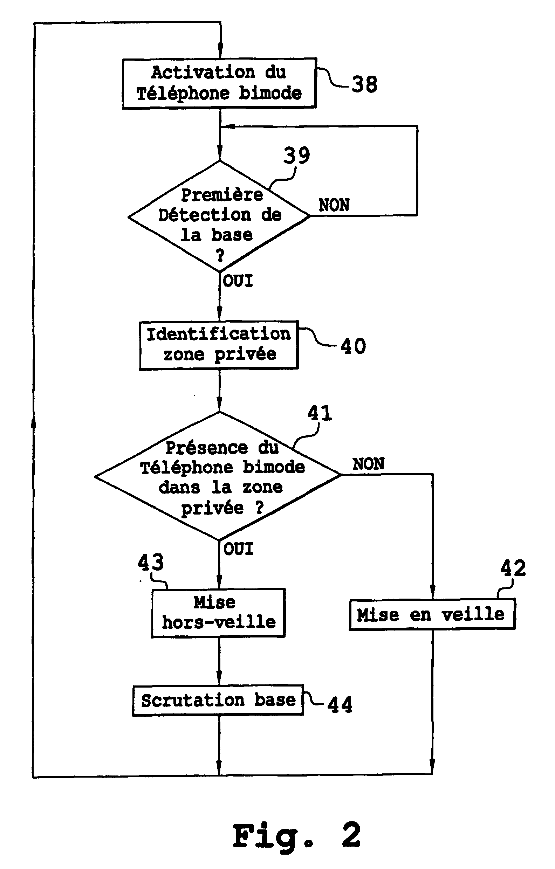

La figure 2 montre, sous forme d'un algorithme, un exemple de fonctionnement du procédé de l'invention. Cet exemple de fonctionnement est décrit à partir des étapes principales du procédé de l'invention. Ainsi, lors d'une première utilisation du téléphone 1, on active ce dernier, dans une étape 38. Une activation du téléphone 1 permet au dispositif 2 de pouvoir établir une communication avec une station de base du réseau 4 et au dispositif 3 de pouvoir établir une communication avec le réseau 7. Une communication avec le réseau 7 est subordonnée à la présence du téléphone 1 dans la zone 26.

Après cette étape 38 d'activation, le dispositif 3 est en attente, dans une étape 39, de se trouver dans la zone 26 afin de pouvoir détecter un signal émis par la base 8. Lorsque le téléphone 1 se trouve effectivement dans la zone 26 alors, dans une étape 40, le dispositif 2 mémorise un code d'identification d'une station de base dont une zone de couverture couvre donc tout ou partie de la zone 26. Dans un exemple le dispositif 2 mémorise à l'emplacement mémoire 28 un code d'identification de la station A couvrant la zone 27. En conséquence, une identification de la zone 27 permet d'identifier une zone privée laquelle indique une présence du téléphone 1 à proximité de la zone 26.

Lors d'une étape 41 de test d'une présence du téléphone 1 dans la zone 26, le dispositif 2 compare un code d'identification reçu d'une station de base avec le code mémorisé à l'emplacement 28.

Dans le cas où le code reçu est différent du code mémorisé, le microprocesseur 12 du dispositif 2 commande le moyen 29 qui active, dans une étape 42, une mise en veille du dispositif 3. Cette mise en veille peut se traduire par une mise hors tension, dans un exemple préféré, des différents éléments du dispositif 3 ou par un fonctionnement dans lequel seul les éléments principaux sont encore activés ou même un fonctionnement à une fréquence réduite. Plus généralement, tout procédé de mise en veille d'un système, pouvant être intégré dans le dispositif 3, peut être utilisé pour mettre en veille le dispositif 3.

Dans le cas contraire, si à l'issu de l'étape 41 le téléphone 1 est présent dans la zone 26 alors, dans une étape 43, le microprocesseur 12 commande le moyen 29 pour mettre le dispositif 3 dans un état hors veille, c'est-à-dire dans un état de fonctionnement normal. Lorsque le dispositif 3 est dans un état de fonctionnement normal, il peut réaliser, dans une étape 44, des opérations de scrutation de la base 8. Ces opérations de scrutation se traduisent notamment par une recherche régulière d'un code d'identification émis par la base 8 identique au code d'identification mémorisé dans la mémoire 20 du dispositif 3 lors de la première détection de la base 8 dans le dispositif 3. Lorsque le téléphone 1 se trouve dans la zone 26, ce dernier peut recevoir un appel transmis par la base 8 ou par la station A. Dans ce cas, c'est à un utilisateur du téléphone 1 de sélectionner un appel parmi les deux voire d'en mettre un en attente pendant qu'il répond à l'autre.

## Revendications

1. Procédé de gestion d'un téléphone (1) bimode comportant un premier dispositif (2) de téléphonie, relié à un réseau (4) de téléphonie mobile par une station (A) de base, et un deuxième dispositif (3) de téléphonie, relié à un réseau (7) de téléphonie fixe sans fil par une base (8), dans lequel :
- on détecte une présence de la base à proximité du deuxième dispositif de téléphonie ;
**caractérisé en ce que** :
- on identifie une première zone (27) privée avec le premier dispositif, la première zone privée étant une zone de couverture d'une station de base, cette zone de couverture comprenant tout ou partie d'une zone (26) domestique couverte par la base ;
- on mémorise, dans une mémoire (15) de sauvegarde du téléphone bimode, un code d'identification de la station de base lorsque le téléphone est à l'intérieur de la zone domestique ;
et **en ce que** :
- on compare un code d'identification reçu avec le code d'identification mémorisé et :
- lorsque ces codes sont différents, on en déduit une absence, dans la première zone privée, du téléphone bimode et on met en veille le deuxième dispositif,
- lorsque ces codes sont identiques, on en déduit une présence du téléphone bimode à l'intérieur de la première zone privée et on met dans un état hors veille le deuxième dispositif.

2. Procédé selon la revendication 1 **caractérisé en ce que** :
- on identifie la première zone privée en mémorisant un groupe de codes d'identification, chaque code identifiant une station (A, B, C) de base couvrant une zone (27, 30, 31) comprenant tout ou partie de la zone domestique couverte par la base ou couvrant une zone proche de la zone domestique.

3. Procédé selon la revendication 1 ou 2 **caractérisé en ce que** :
- on identifie la première zone privée en mémorisant un groupe de codes d'identification, chaque code identifiant une station de base proche de la zone couverte par la base.

4. Procédé selon l'une des revendications 1 à 3 **caractérisé en ce que**:
- on identifie une deuxième zone privée en mémorisant dans la mémoire de sauvegarde un deuxième groupe de codes d'identification.

5. Procédé selon l'une des revendications 1 à 4 **caractérisé en ce que**:
- on place la mémoire de sauvegarde dans le premier dispositif.

6. Procédé selon l'une des revendications 1 à 5 **caractérisé en ce que**
- on met le deuxième dispositif dans un état de veille ou dans un état hors veille après l'écoulement d'une temporisation déclenchée lorsqu'une absence du téléphone bimode, dans la première zone privée, ou une présence du téléphone bimode, à l'intérieur de la première zone privée, respectivement a été détectée.

7. Procédé selon l'une des revendications 1 à 6 **caractérisé en ce que** lorsque le premier dispositif est hors de portée d'une station (A, B, C, D) de base :
- on met le deuxième dispositif dans un état hors veille.

8. Procédé selon l'une des revendications 1 à 7 **caractérisé en ce que** lors d'un appui sur une touche du téléphone bimode :
- on met le deuxième dispositif dans un état hors veille si celui-ci se trouve dans la zone privée et ou si le premier dispositif est hors de portée d'une station (A, B, C, D) de base, la mise dans un état hors veille étant inhibée lorsqu'on détecte une absence, dans la première zone privée, du premier dispositif.

9. Téléphone (1) bimode comportant un premier dispositif (2) de téléphonie, relié à un réseau (4) de téléphonie mobile par une station (A) de base, et un deuxième dispositif (3) de téléphonie, relié à un réseau (7) de téléphonie fixe sans fil par une base (8), **caractérisé en ce qu'**il comporte des moyens (15) de sauvegarde d'un code d'identification d'une station (A) de base couvrant une zone (27) comprenant une zone (26) couverte par la base et **en ce qu'**il comporte un moyen (29) de mise en veille du deuxième dispositif lorsqu'un code d'identification reçu d'une station de base est différent d'un code mémorisé.

10. Téléphone selon la revendication 9 **caractérisé en ce qu'**il comporte un moyen de temporisation à la fin de laquelle le moyen de mise en veille est activé pour mettre le deuxième dispositif dans un état de veille ou dans un état hors veille.

## Patentansprüche

1. Verfahren zur Steuerung eines Dualmodetelefons (1), umfassend eine erste Sprecheinrichtung (2), die mit einem Mobiltelefonnetz (4) durch eine Feststation (A) verbunden ist, und eine zweite Sprecheinrichtung (3), die mit einem drahtlosen Festtelefonnetz (7) durch eine Basis (8) verbunden ist, bei dem
- ein Vorhandensein der Basis in der Nähe der zweiten Sprecheinrichtung erfasst wird,
**dadurch gekennzeichnet, dass**
- eine erste Privatzone (27) mit der ersten Einrichtung identifiziert wird, wobei die erste Privatzone eine von einer Feststation abgedeckte Zone ist, wobei diese abgedeckte Zone die gesamte oder einen Teil einer von der Basis abgedeckten Heimzone (26) umfasst;
- in einem Sicherungsspeicher (15) des Dualmodetelefons ein Identifikationscode der Feststation, wenn sich das Telefon innerhalb der Heimzone befindet, gespeichert ist;
und dadurch, dass
- ein empfangener Identifikationscode mit dem gespeicherten Identifikationscode verglichen wird, und
- wenn diese Codes unterschiedlich sind, davon in der ersten Privatzone ein Nichtvorhandensein des Dualmodetelefons abgeleitet wird und die zweite Einrichtung in einen Nichtbereitschaftszustand versetzt wird,
- wenn diese Codes identisch sind, davon in der ersten Privatzone ein Vorhandensein des Dualmodetelefons innerhalb der ersten Privatzone abgeleitet wird und die zweite Einrichtung in einen Nichtbereitschaftszustand versetzt wird.

2. Verfahren nach Anspruch 1, **dadurch gekennzeichnet, dass**
- die erste Privatzone identifiziert wird, indem eine Gruppe von Identifikationscodes gespeichert wird, wobei jeder Code eine Feststation (A, B, C) identifiziert, die eine Zone (27, 30, 31) abdeckt, die die gesamte oder einen Teil der von der Basis abgedeckten Heimzone umfasst oder eine Zone nahe der Heimzone abdeckt.

3. Verfahren nach Anspruch 1 oder 2, **dadurch gekennzeichnet, dass**
- die erste Privatzone identifiziert wird, indem eine Gruppe von Identifikationscodes gespeichert wird, wobei jeder Code eine Feststation nahe der von der Basis abgedeckten Zone identifiziert.

4. Verfahren nach einem der Ansprüche 1 bis 3, **dadurch gekennzeichnet, dass**
- eine zweite Privatzone identifiziert wird, indem in dem Sicherungsspeicher eine zweite Gruppe von Identifikationscodes gespeichert wird.

5. Verfahren nach einem der Ansprüche 1 bis 4, **dadurch gekennzeichnet, dass**
- der Sicherungsspeicher in der ersten Einrichtung angeordnet wird.

6. Verfahren nach einem der Ansprüche 1 bis 5, **dadurch gekennzeichnet, dass**
- die zweite Einrichtung in einen Bereitschaftszustand oder in einen Außerbereitschaftszustand nach dem Ablaufen einer Verzögerung versetzt wird, die ausgelöst wird, wenn ein Nichtvorhandensein des Dualmodetelefons in der ersten Privatzone bzw. ein Vorhandensein des Dualmodetelefons im Inneren der ersten Privatzone erfasst wurde.

7. Verfahren nach einem der Ansprüche 1 bis 6, **dadurch gekennzeichnet, dass**, wenn die erste Einrichtung außerhalb der Reichweite einer Feststation (A, B, C, D) ist,
- die zweite Einrichtung in einen Außerbereitschaftszustand versetzt wird.

8. Verfahren nach einem der Ansprüche 1 bis 7, **dadurch gekennzeichnet, dass** bei Drücken auf eine Taste des Dualmodetelefons
- die zweite Einrichtung in einen Außerbereitschaftszustand versetzt wird, wenn sich diese in der Privatzone befindet oder wenn die erste Einrichtung außer Reichweite einer Feststation (A, B, C, D) ist, wobei das Setzen in einen Außerbereitschaftszustand verhindert wird, wenn in der ersten Privatzone ein Nichtvorhandensein der ersten Einrichtung erfasst wird.

9. Dualmodetelefon (1), umfassend eine erste Sprecheinrichtung (2), die mit einem Mobiltelefonnetz (4) durch eine Feststation (A) verbunden ist, und eine zweite Sprecheinrichtung (3), die mit einem drahtlosen Festsprechnetz (7) durch eine Basis (8) verbunden ist, **dadurch gekennzeichnet, dass** es Mittel (15) zur Sicherung eines Identifikationscodes einer Feststation (A) umfasst, die eine Zone (27) abdeckt, die eine von der Basis abgedeckte Zone (26) umfasst, und dass es ein Mittel (29) zur Inbereitschaftsetzung der zweiten Einrichtung umfasst, wenn sich ein von einer Feststation empfangener Identifikationscode von einem gespeicherten Code unterscheidet.

10. Telefon nach Anspruch 9, **dadurch gekennzeichnet, dass** es ein Verzögerungsmittel umfasst, bei dessen Ende das Mittel zur Inbereitschaftsetzung aktiviert wird, um die zweite Einrichtung in einen Bereitschaftszustand oder in einen Außerbereitschaftszustand zu versetzen.

## Claims

1. A process for handling a dual mode telephone (1) comprising a first telephony device (2), linked to a mobile telephony network (4) by a base station (A), and a second telephony device (3), linked to a fixed wireless telephony network (7) by a base (8), wherein:
- the presence of the base near the second telephony device is detected;
**characterized in that**
- a first private zone (27) with the first device is identified, the first private zone being coverage for a base station, this coverage comprising entirely or in part a domestic zone (26) covered by the base;
- an identification code for the base station is stored in the dual mode telephone backing store (15) for when the telephone is inside the domestic zone;
and **in that**
- the identification code received is compared to the stored identification code and
- when these codes are different, it is deduced that the dual mode telephone is absent from the first private zone and the second device is put on standby,
- when these codes are identical, it is deduced that the dual mode telephone is present inside the first private zone and the second device is taken off standby status.

2. The process according to claim 1 **characterized in that**
- the first private zone is identified by storing a group of identification codes, each code identifying a base station (A, B, C) covering a zone (27, 30, 31) comprised entirely or in part of the domestic zone covered by the base, or covering a zone near the domestic zone.

3. The process according to claim 1 or 2 **characterized in that**
- the first private zone is identified by storing a group of identification codes, each code identifying a base station near the zone covered by the base.

4. The process according to one of claims 1 to 3 **characterized in that**
- a second private zone is identified by storing a second group of identification codes in the backing store.

5. The process according to one of claims 1 to 4 **characterized in that**
- the backing store is placed in the first device.

6. The process according to one of claims 1 to 5 **characterized in that**
- the second device is placed on or taken off standby status after the passage of a time delay triggered when it has been respectively detected that the dual mode telephone is absent from the first private zone or present in the first private zone.

7. The process according to one of claims 1 to 6 **characterized in that** when the first device is outside the range of a base station (A, B, C, D)
- the second device is taken off standby status.

8. The process according to one of claims 1 to 7 **characterized in that** when a dual mode telephone button is pressed
- the second device is taken off standby status if it is found within the private zone and/or if the first device is outside the base station (A, B, C, D) range, this taking off standby status being inhibited when it has been detected that the first device is absent from the first private zone.

9. A dual mode telephone (1) comprising a first telephony device (2) linked to a mobile telephony network (4) by a base station (A), and a second telephony device (3) linked to a fixed wireless telephony network (7) by a base (8), **characterized in that** the telephone comprises a means (15) for storing an identification code for a base station (A) covering a zone (27) comprised of a zone (26) covered by the base, and **in that** the telephone comprises a means (29) for putting the second device on standby when an identification code received from a base station is different from a stored code.

10. The telephone according to claim 9 **characterized in that** the telephone comprises a time delay means at the end of which delay the standby means is activated for putting the second device on standby status or taking the second device off standby status.
